Europäisches Patentamt

(19) European Patent Office

Office européen des brevets

(11) Veröffentlichungsnummer : **0 139 817**

**B1**

# (12) EUROPÄISCHE PATENTSCHRIFT

(45) Veröffentlichungstag der Patentschrift :
11.11.87

(51) Int. Cl.⁴ : **G 06 F 15/40**

(21) Anmeldenummer : 84103495.2

(22) Anmeldetag : 29.03.84

(54) Verfahren und Anordnung zum Aufsuchen von einem vorgegebenen Suchargument entsprechenden Daten einer Datenfolge in einem Hybrid-Assoziativspeicher.

(30) Priorität : 23.09.83 DE 3334515

(43) Veröffentlichungstag der Anmeldung :
08.05.85 Patentblatt 85/19

(45) Bekanntmachung des Hinweises auf die Patenterteilung : 11.11.87 Patentblatt 87/46

(84) Benannte Vertragsstaaten :
AT BE CH DE FR GB IT LI NL SE

(56) Entgegenhaltungen :
EP-A- 0 035 787
DE-A- 1 424 741
DE-A- 2 547 052
DE-A- 3 216 905
GB-A- 1 522 518
US-A- 3 307 153
US-A- 4 257 110
IBM Technical Disclosure Bulletin, Vol. 4, No. 1, Juni 1961, S. 21, 22
IBM Technical Disclosure Bulletin, Vol. 11, Nr. 11, April 1969, S. 1379-1380

(73) Patentinhaber : **Siemens Aktiengesellschaft Berlin und München**
**Wittelsbacherplatz 2**
**D-8000 München 2 (DE)**

(72) Erfinder : **Wolf, Gerhard, Dipl.-Ing.**
**Chopinstrasse 5**
**D-8000 München 60 (DE)**

## Beschreibung

Die Erfindung betrifft ein Verfahren und eine Anordnung zum Aufsuchen von einem vorgegebenen Suchargument entsprechenden Daten gemäß dem Oberbegriff des Patentanspruches 1.

Ein derartiges Verfahren ist beispielsweise aus der US-PS 4.257.110 oder aus « Informatik-Fachberichte » von W. Brauer, Bd. 62 (1983), Seiten 42 bis 44 bekannt.

Der Vorteil von Hybrid-Assoziativspeichern, die aus einer assoziativen Oberfläche und einem normalen Zugriffspeicher als Basisspeicher bestehen, gegenüber reinen Assoziativspeichern für Suchprozeduren u. dgl. besteht vor allem in der kostengünstigeren Speicherung großer Datenmengen. Dabei spielt die Ausrichtung der Datenfolgen in vertikaler oder horizontaler Richtung bezüglich der Leistungsfähigkeit des Hybrid-Assoziativspeichers eine entscheidende Rolle. Vorteilhafter ist allgemein die horizontale Ausrichtung der Datenfolgen, doch führt die Speicherbreite dann zu einer Längenbegrenzung der Datenfolgen, wenn man nicht mehrere Zeilen ketten will. Bei langen Datenfolgen erscheint trotz anderer Nachteile die vertikale Ausrichtung vorteilhafter. Neben der Speicherungsstruktur hat das vorgesehene Suchverfahren entscheidenden Einfluß auf die Systemarchitektur des Hybrid-Assoziativspeichers.

Bei der bekannten Anordnung gemäß dem Oberbegriff des Patentanspruches 1 liegt die vertikale Datenausrichtung zugrunde, und das verwendete Suchverfahren ist offensichtlich auf « ausgerichtete » Daten, d. h. gleich lange Datenfolgen entsprechend Tabellenzeilen, abgestellt, wobei ein Suchvorgang das Suchen über die volle Länge einer Datenfolge umfaßt. Dieses Verfahren ist insbesondere für nicht ausgerichtete Daten, z. B. Texte, zu aufwendig, da nicht vorauszusehen ist, in welchem Bereich der Datenmenge bzw. des Textes sich die gewünschten Daten bzw. Textstelle befinden.

Aus der DE-AS-1 424 741 ist eine Einrichtung zum Durchsuchen eines Speichers, z. B. eines Magnetbandspeichers bekannt, bei dem die einzelnen Teile einer Datengruppe durch Trennzeichen getrennt hintereinander gespeichert sind. Die einzelnen Teile einer Datengruppe können z. B. der Name eines Kunden, seine Anschrift, seine Kundennummer und dgl. sein. Die einzelnen Bits eines Zeichens eines Teiles der Datengruppe liegen parallel zur Laufrichtung des Bandes und werden nacheinander überprüft. Ergibt die Überprüfung, daß ein Zeichen eines Teiles der Datengruppe mit einem Zeichen des Suchargumentes nicht übereinstimmt, dann wird zum nächsten Teil der Datengruppe oder zu einer anderen Datengruppe übergegangen. Dieses Verfahren erfordert, daß die einzelnen Teile einer Datengruppe und auch die einzelnen Datengruppen durch Trennzeichen voneinander getrennt sind. Bei Texten, die ohne Trennzeichen fortlaufend in einem Speicher enthalten sind, kann nach diesem Verfahren nicht vorgegangen werden. Eine entsprechende Lösung ergibt sich aus der US-A-3 307 153 bzw. aus der GB-A-1 522 518. Jeweils wird festgestellt, ob ein erstes Zeichen des Datenwortes mit dem ersten Zeichen des Suchargumentes übereinstimmt, und wenn dies nicht der Fall ist, die Suche mit dem nächsten Datenwort fortgesetzt.

Aufgabe der Erfindung ist es daher, ein Suchverfahren anzugeben, das insbesondere bei nicht ausgerichteten Daten effektiver arbeitet und bei dem es möglich ist, den Suchvorgang über das Ende einer Datenfolge hinaus fortzusetzen.

Diese Aufgabe wird bei einem Verfahren der eingangs angegebenen Art durch die kennzeichnenden Merkmale des Patentanspruchs 1 gelöst.

Durch die vertikale Ausrichtung der Daten mit Zeichen serieller aber bitparalleler Prüfung bleibt wie bei der bekannten Anordnung die Trefferkettung auf eine Zeichenspalte beschränkt. Das Wirksamschalten der Trefferkettung wird aber vom Auftreten des ersten Treffers abhängig gemacht. Der Anfangspunkt der Kettung bleibt damit variabel und öffnet das Verfahren auch für nicht ausgerichtete Daten. Parallel dazu unterbleibt vorerst eine Änderung des gültigen Suchargumentzeichens, bis ein Treffer aufgetreten ist. Des weiteren wird beim Abriß der Trefferkettung der Suchvorgang sofort unterbrochen und mit verschobenem Startschritt in der Datenfolge erneut begonnen, was einer Verschiebung des Suchargumentes gegenüber der zu prüfenden Datenfolge um einen Zeichenschritt gleichkommt. Dieses Grundprinzip eröffnet in vorteilhafter Weise die Möglichkeit, daß nach einem einheitlichen Verfahren mehrere vertikale Datenfolgen gleichzeitig überprüft werden können, so daß die durch die Datenfolgen insgesamt vorgegebene Datenmenge schneller überprüft werden kann. Bei der entsprechenden Weiterbildung der Erfindung gemäß Anspruch 3 braucht der Suchvorgang in diesem Falle erst dann abgebrochen zu werden, wenn für keine der gleichzeitig überprüften Datenfolgen ein Treffer angezeigt wird. Die Trefferüberwachung kann in diesem Falle gemäß der Weiterbildung nach Patentanspruch 4 in einfacher Weise von der mit der assoziativen Oberfläche in üblicher Weise gekoppelten Trefferauswertung übernommen werden. Ein Eingriff in die Anordnungen für die Trefferkettung ist also nicht erforderlich. Alle Verknüpfungseinheiten der assoziativen Oberfläche werden einheitlich von einer Quelle, z. B. von der übergeordneten Speichersteuerung aus, mit den notwendigen Parametern und den Steuerbefehlen versorgt und damit global gesteuert, unabhängig davon, ob für einzelne der Datenfolgen die Trefferkettungen bereits abgerissen sind, wenn nur für wenigstens eine der Datenfolgen die Trefferkettung noch aufrecht erhalten ist.

Durch die Parallelschaltung von mehreren vertikalen Datensäulen wird u. a. auch eine Anpassung der Speicherbreite an die üblichen Datenwortlängen, von z. B. vier oder acht Zeichen je Wort, auf den Leitungssystemen für den Anschluß des Hybrid-Assoziativspeichers möglich und damit das Laden bzw. Entladen des Basisspeichers erleichtert.

Auch Kettungen von gleich langen Datenteilfolgen lassen sich dabei ohne wesentlichen Mehraufwand bewältigen.

Besondere Vorteile ergeben sich bei einer Anordnung gemäß Anspruch 8, demzufolge der Basisspeicher in spezieller Weise entsprechend der älteren deutschen Patentanmeldung P 33 11 665.2 ausgebildet ist.

Nachfolgend sei die Erfindung von in der Zeichnung dargestellten Ausführungsbeispielen näher erläutert. Im einzelnen zeigen

Fig. 1 den prinzipiellen Aufbau eines Hybrid-Assoziativspeichers mit versetzter Einordnung der Subeinheiten von Dateneinheiten im Basisspeicher zur Bildung paralleler vertikaler Datenfolgen für die einzelnen Verknüpfungseinheiten der assoziativen Oberfläche gemäß einer besonderen Ausführungsform der Erfindung,

Fig. 2 den Aufbau einer Verknüpfungseinheit als Baustein der assoziativen Oberfläche des Hybrid-Assoziativspeichers von Fig. 1,

Fig. 3 den prinzipiellen Aufbau der Treffersteuerung in der Verknüpfungseinheit von Fig. 2,

Fig. 4 ein Prinzipschaltbild zur Erläuterung der bei geketteten Datenteilfolgen möglicherweise notwendig werdenden Umschaltung für die Trefferkettung,

Fig. 5 einen Teilausschnitt der Trefferauswertesteuerung bei Ausführung der Trefferkettung von geketteten Datenteilfolgen und

Fig. 6 ein Flußdiagramm zur Erläuterung der Arbeitsweise des in Fig. 1 gezeigten Hybrid-Assoziativspeichers beim Suchen von Daten gemäß der Erfindung.

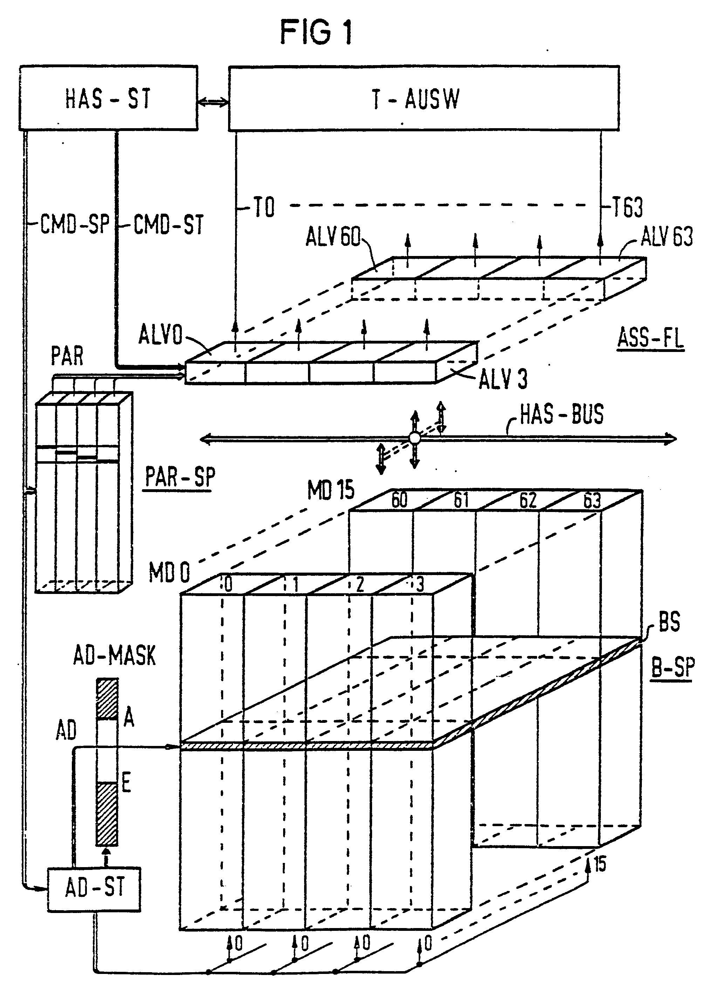

Der in Fig. 1 gezeigte Hybrid-Assoziativspeicher besteht in herkömmlicher Weise aus einem Basisspeicher B-SP, einer assoziativen Oberfläche ASS-FL, einer mit letzterer gekoppelten Trefferauswertung T-AUSW und der übergeordneten Steuerung HAS-ST.

Der Basisspeicher B-SP ist vorzugsweise in Anlehnung an die ältere deutsche Patentanmeldung P 33 11 665.2 ausgebildet. Er ist z. B. aus 16 Speichergruppen MD0 bis MD15 zusammengesetzt, von denen jede, z. B. MD0, mit jeweils aus vier Zeichen oder Byte bestehenden Dateneinheiten zeilenweise zum Ein- oder Ausspeichern über das Datenleitungssystem HAS-BUS ansteuerbar ist. Dateneinheiten können also im direkten Zugriff zeilenweise wie bei einem herkömmlichen Speicher wahlweise in eine der Speichergruppen MD0 bis MD15 ein- oder ausgespeichert werden. Daneben besteht insbesondere für den assoziativen Betrieb des Basisspeichers B-SP die Möglichkeit, aus jeder Speichergruppe gleichzeitig vier Zeichen, und zwar die einander entsprechenden von jeweils vier verschiedenen Dateneinheiten je Speichergruppe, anzusteuern und der assoziativen Oberfläche ASS-FL zuzuführen oder von dieser zu übernehmen. Bei einem solchen Ansteuervorgang wird also in einem Zuge eine ganze Byte- oder Zeichenscheibe BS aus im vorliegenden Falle 4 × 16 = 64 Zeichen vom Basisspeicher B-SP zur Verfügung gestellt oder von diesem übernommen. Entsprechend können die 64 Verknüpfungseinheiten ALV0 bis ALV63 der assoziativen Oberfläche ASS-FL gleichzeitig tätig werden.

Diese Art der Zugriffsteuerung für den Basisspeicher B-SP ermöglicht andererseits, daß z. B. in jeder Bytesäule, z. B. 0, des Basisspeichers die aufeinanderfolgenden Zeichen einer Dateneinheit und Zeichen aufeinanderfolgender Dateneinheiten innerhalb einer Datenfolge derselben Verknüpfungseinheit, z. B. ALV0, der assoziativen Oberfläche ASS-FL nacheinander zugeführt werden können, als wären die einzelnen Zeichen der Dateneinheiten vertikal untereinander und nicht horizontal nebeneinander, wenn auch zeilenmäßig versetzt, gespeichert. Datenfolgen werden daher in der Regel von derselben Verknüpfungseinheit der assoziativen Oberfläche verarbeitet. Eine solche Säulen- oder Stringbildung von Zeichen einer Datenfolge eröffnet verschiedene Möglichkeiten der Einordnung von aus vielen Dateneinheiten zusammengesetzten Dateien in den Basisspeicher B-SP, nämlich die Bildung einer Datei durch einen einzigen solchen String, so daß im vorliegenden Fall 64 verschiedene Dateien gleichzeitig durch die assoziative Oberfläche ASS-FL überprüft werden können, oder aber die Verteilung einer Datei auf die parallelen Strings mit oder ohne Serienschaltung der Strings im Bereich des ganzen oder nur eines Teiles des Basisspeichers, so daß Teile der Datei parallel und damit die Daten als solche schneller überprüft werden können. Die Beschränkung auf vorgegebene Ebenen des Basisspeichers B-SP kann dabei durch eine vorgegebene Adressenmaske AD-MASK für die Ansteueradressen AD gesteuert werden, die z. B. durch die Anfangs- und Endadresse A/E des jeweiligen Dateibereiches über die Adressensteuerung AD-ST anhand von Steuerbefehlen CMD-SP der übergeordneten Steuerung HAS-ST des Hybrid-Assoziativspeichers eingestellt wird. Gleichzeitig mit der Bereitstellung der Daten aus dem Basisspeicher B-SP werden die Verknüpfungseinheiten ALV0 bis ALV63 der assoziativen Oberfläche ASS-FL von der übergeordneten Steuerung HAS-ST mit den notwendigen Steuerbefehlen CMD-ST versorgt, so daß die vom Basisspeicher zur Verfügung gestellten Zeichen individuell überprüft und verarbeitet werden können. Die für die Bearbeitung der Daten in der assoziativen Oberfläche ASS-FL benötigten Parameter liefern gesonderte Register oder bei Suchverfahren zweckmäßig ein gesonderter Parameterspeicher PAR-SP, der zweckmäßig in gleicher Weise aufgebaut ist wie der Basisspeicher B-SP, allerdings mit dem Unterschied, daß infolge der gleichartigen Beaufschlagung aller Verknüpfungseinheiten ALV... der assoziativen Oberfläche mit einheitlichen externen Parametern lediglich eine Speichergruppe dafür benötigt wird. Mit jeder durch die Steuerung HAS-ST bewirkten Ansteuerung des Parameterspeichers PAR-SP werden beispielsweise vier unterschiedliche Parameter zur Verfügung gestellt, nämlich ein Suchargumentzeichen, eine Bitstrukturmaske, ein externer Operand und ein Gewichtungsfaktor.

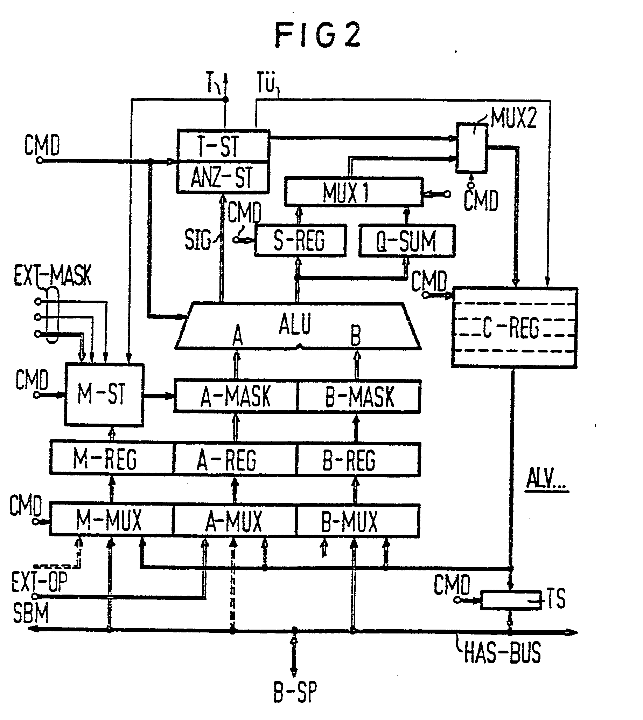

Der Aufbau der einzelnen Verknüpfungseinrichtungen ist in Fig. 2 gezeigt und entspricht im wesentlichen der älteren deutschen Patentanmeldung P 33 19 581.1. Kernstück dieser Verknüpfungseinrichtung ALV, aus der die assoziative Oberfläche ASS-FL in Fig. 1 zusammengesetzt ist, ist eine arithmetisch-logische Einheit ALU mit der Arbeitsbreite für ein Zeichen, also z. B. für acht Bit. Den beiden Operandeneingängen der ALU ist jeweils eine Maskiereinrichtung A-MASK bzw. B-MASK, ein Operandenregister A-REG bzw. B-REG und ein Auswahlschalter A-MUX bzw. B-MUX vorgeschaltet. Über letztere können die beiden Operandenregister aus den verschiedensten Quellen wahlweise geladen werden. Im vorliegenden Falle sei unterstellt, daß dem Register B-REG in den überwiegenden Anwendungsfällen Daten aus dem Basisspeicher B-SP des Hybrid-Assoziativspeichers zugeführt werden, die anhand eines im anderen Operandenregister A-REG zur Verfügung gestellten Suchargumentes SBM zu überprüfen sind. Anstelle des Argumentes SBM können dem Register A-REG auch externe Operanden EXT-OP für durchzuführende Verknüpfungsfunktionen zugeführt werden. Des weiteren können die Operandenregister auch vom Ergebnisregister C-REG der ALU, das zweckmäßig aus einem Registersatz von z. B. 16 Einzelregistern besteht, geladen werden.

Analog zu den beiden Operandenregistern A-REG und B-REG ist auch noch ein gesondertes Maskenregister M-REG mit vorgeschaltetem Auswahlschalter M-MUX vorgesehen, das ebenfalls aus mehreren Quellen geladen werden kann, z. B. vom Ergebnisregister C-REG oder vom Datenleitungssystem HAS-BUS und ggf. auch von einer externen Quelle.

Mit dem Maskenregister M-REG ist des weiterem eine Maskensteuerung M-ST zur Einstellung der Operandenmasken A-MASK und B-MASK gekoppelt. Neben den Maskeninformationen aus dem Maskenregister M-REG können von dieser Steuerung auch direkt zugeführte externe Maskeninformationen EXT-MASK verarbeitet und vorliegende Treffersignale T berücksichtigt werden. Die Arbeitsweise dieser Maskensteuerung M-ST ist ausführlich in der bereits genannten älteren deutschen Patentanmeldung P 33 19 581.1 erläutert.

Der Ausgang der Verknüpfungseinheit ALU ist parallel mit einem Schieberegister S-REG und einem Quersummenbildner Q-SUM verbunden. Die Anzeigensteuerung ANZ-ST dient zur Bildung der üblichen ALU-Anzeigen aus den Ergebnissignalen SIG der ALU. Mit dieser Anzeigensteuerung ist eine Treffersteuerung T-ST gekoppelt, die abhängig von den jeweils vorliegenden Anzeigen und der jeweils durchgeführten Assoziationsrelation ermittelt, ob ein Treffer erzielt worden ist oder nicht und wie das jeweilige Trefferergebnis zu werten ist.

Ergebnisse der Treffersteuerung T-ST können ebenso wie die Ergebnisse des Quersummenbildners Q-SUM oder der ALU bzw. des zwischengeschalteten Schieberegisters S-REG über Auswahlschalter MUX1 und MUX2 an das Ergebnisregister C-REG weitergeleitet werden, wobei die Übernahme in das Ergebnisregister ggf. vom Vorliegen eines Steuersignals $T_{ü}$ der Treffersteuerung T-ST abhängig ist. Das Tätigwerden der einzelnen genannten Bauteile der Verknüpfungseinheit ALV... und die Art ihres Tätigwerdens wird — wie gezeigt — durch Steuersignale CMD der in Fig. 1 enthaltenen übergeordneten Ablaufsteuerung HAS-ST festgelegt. Trotz der einheitlichen Kennzeichnung dieser Signale mit CMD dürfte klar sein, daß es sich hierbei um unterschiedliche Signale auf einer oder mehreren Signalleitungen handelt, um die einzelnen Bauteile ihrer Funktion entsprechend ansteuern zu können. Das gilt insbesondere im Hinblick auf die ALU, der mitzuteilen ist, welche Funktion jeweils ausgeführt werden soll.

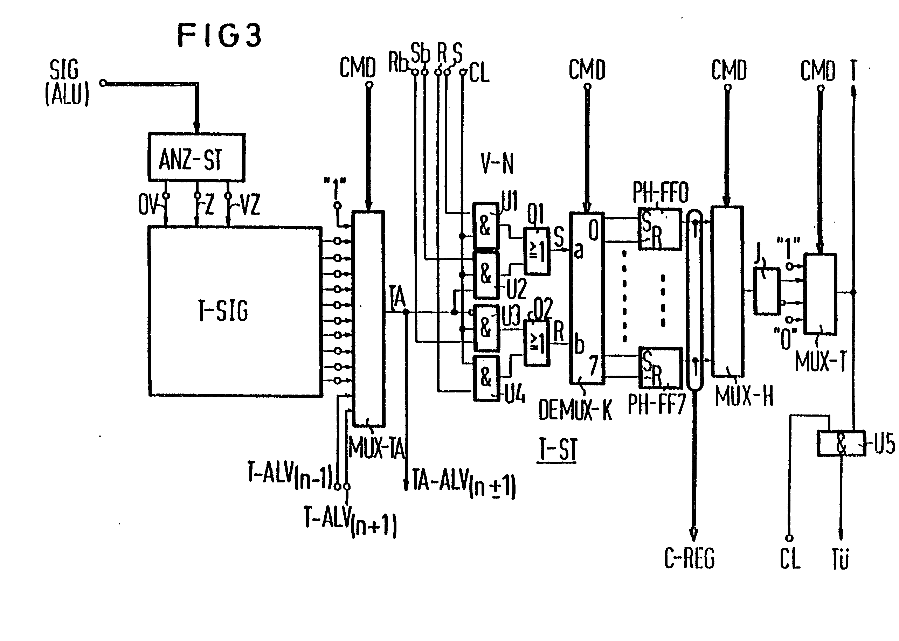

Einzelheiten über den Aufbau der Treffersteuerung T-ST sind aus Fig. 3 entnehmbar, die im linken oberen Teil die Anzeigensteuerung ANZ-ST zeigt. Diese Anzeigensteuerung ermittelt in an sich bekannter Weise aus den Signalen SIG der ALU die benötigten Anzeigen, z. B. die Anzeigen OV für den Überlauf, Z für das Ergebnis O und VZ für das Vorzeichen des jeweiligen Verknüpfungsergebnisses. Aus diesen Anzeigen werden in der Einrichtung T-SIG die den einzelnen Assoziationsrelationen entsprechenden Treffersignale gebildet, von denen mit dem Auswahlschalter MUX-TA das jeweils zutreffende Treffersignal ausgewählt und als Trefferanzeige TA weitergeleitet wird. Zwei weitere Eingänge des Auswahlschalters MUX-TA sind in Auswirkung der Erfindung mit den Trefferausgängen der jeweils benachbarten beiden Verknüpfungseinheiten $ALV_{(n-1)}$ und $ALV_{(n+1)}$ verbunden. In gleicher Weise ist der Ausgang des Auswahlschalters MUX-TA für die Trefferanzeige TA mit den entsprechenden Anschlüssen der benachbarten Verknüpfungseinrichtungen verbunden.

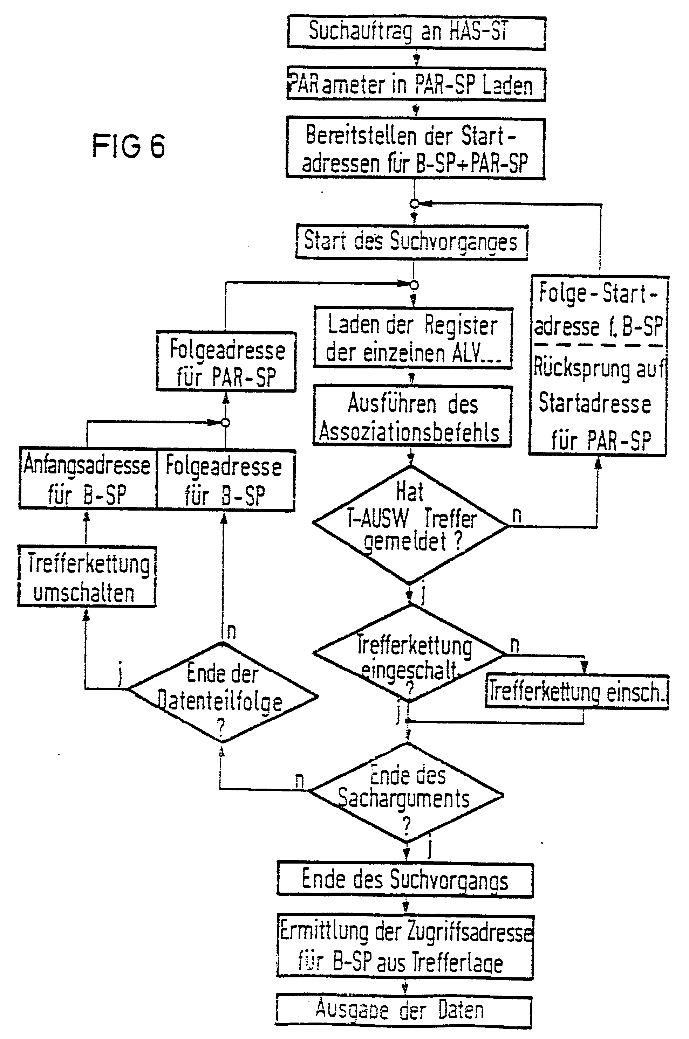

Diese Art der Trefferübernahme zur Aufrechterhaltung der Trefferkettung bei der Überprüfung von geketteten Datenteilfolgen ist jedoch nur zweckmäßig, wenn das Suchargument maximal nur zwei gekettete Datenteilfolgen erfaßt, seine Länge gegenüber der der Datenteilfolgen also begrenzt ist. Bei Suchargumenten, deren Länge die einer Datenteilfolge übersteigt und die daher mehr als zwei aufeinanderfolgende Datenteilfolgen erfassen können, ist es dagegen zweckmäßiger, die Trefferkettung bei Erreichen des Endes der Datenteilfolgen in die die assoziative Oberfläche ASS-FL (Fig. 1) überwachende Trefferauswertesteuerung T-AUSW zu verlagern, was später noch anhand von Fig. 5 näher erläutert wird.

Die ermittelte und ausgewählte Trefferanzeige TA wird nun nicht unmittelbar als Treffer T weitergeleitet, sondern sie wird gegebenenfalls abhängig von dem jeweiligen Anwendungsfall entsprechenden Randbedingungen modifiziert. Zu diesem Zweck ist ein aus den UND-Gliedern U1 bis U4 und den ODER-Gliedern O1 und O2 bestehendes Verknüpfungsnetzwerk vorgesehen, das Setz- und Rücksetzbefehle S bzw. R für eine nachgeschaltete bistabile Kippstufe PH-FF liefert. Im vorliegenden Falle ist entsprechend der Arbeitsbreite der Verknüpfungseinheit je Bitstelle eine Kippstufe vorgesehen, insgesamt also die Kippstufen PH-FF0 bis PH-FF7, von denen jeweils eine über den vorgeschalteten Auswahlschalter DEMUX-K angesteuert wird. Mit diesen Kippstufen können so in einfacher Weise bei der Überprüfung von Datenfolgen mit einem aus mehreren Zeichen bestehenden Argument entsprechende Teiltreffer gekettet und daraus bei erfüllter Kettungsbedingung ein Globaltreffer abgeleitet werden, wobei darüber hinaus eine Kettung solcher Globaltreffer von unterteilten Datenfolgen möglich ist.

Um in der Art der Modifikation und bezüglich der auszuführenden Kettungsfunktion möglichst frei zu sein, können die Trefferkippstufen PH-FF... durch das Verknüpfungsnetzwerk V-N sowohl unbedingt als auch bedingt gesetzt und oder zurückgesetzt werden, was durch die Steuersignale S und R für die unbedingte Einstellung und durch die Steuersignale $S_b$ und $R_b$ für die bedingte, d. h. für die von der jeweiligen Trefferanzeige TA abhängige Einstellung ermöglicht wird, die wie die übrigen Signale CMD von der übergeordneten Steuerung geliefert werden. So kann z. B. zu einem bestimmten Zeitpunkt im Rahmen einer Suchprozedur ein ausgewähltes Kettungsflipflop, z. B. PH-FF0, zunächst unbedingt oder in Verbindung mit einem Treffer bedingt gesetzt und anschließend die Trefferkettung wirksam geschaltet werden, indem durch Umschalten auf ein bedingtes Rücksetzen mit dem Steuersignal $R_b$ das Kettungsflipflop solange gesetzt bleibt, bis die Kettungsfolge durch das Ausbleiben eines Treffers unterbrochen wird. Auf diese Weise kann ein einmal zurückgesetztes Kettungsflipflop durch einen nachfolgenden Treffer nicht wieder gesetzt werden. Selbstverständlich könnte die Blockade gegen ein erneutes Setzen des Kettungsflipflops auch in der gleichen Weise wie bei der durch die bereits genannte US-PS 4.257.110 bekannten Anordnung erzielt werden.

Die von den Kettungskippstufen PH-FF0 bis PH-FF7 zur Verfügung gestellten Treffersignale sind durch einen nachgeschalteten Auswahlschalter MUX-H wiederum einzeln auswählbar und können verschieden gewertet werden, indem z. B. ein Treffer als Nichttreffer oder aber als ein solcher gewertet wird. Die damit verbundene Invertierungsfunktion übernimmt das Invertierglied I. Auch kann unabhängig von dem tatsächlich erzeugten Treffersignal ein fest vorgegebenes Signal « 0 » oder « 1 » als Treffer gewertet werden. Die entsprechende Auswahl und Festlegung trifft letztendlich der Auswahlschalter MUX-T abhängig von wirksamen Steuersignalen CMD, der das endgültige Treffersignal T liefert, das in an sich bekannter Weise der die Treffersignale der assoziativen Oberfläche überwachenden Trefferauswertesteuerung T-AUSW in Fig. 1 zugeleitet wird.

Von dem Treffersignal T kann intern auch die Übernahme des jeweiligen ALU-Ergebnisses oder der Einstellung der Kettungsflipflops PH-FF0 bis PH-FF7 in das Ergebnisregister C-REG abhängig von der Einstellung des Auswahlschalters MUX2 (Fig. 2) abhängig gemacht werden, was in Fig. 3 durch die Pfeile $T_{\ddot{u}}$ für den Übernahmetakt und C-REG für die Kippstufeneinstellung angedeutet ist.

Die bei der Durchführung von Assoziationsrelationen mit Hilfe der einzelnen Treffersteuerungen T-ST gewonnenen Treffersignale T0 bis T63 der assoziativen Oberfläche ASS-FL (Fig. 1) werden in an sich bekannter Weise einer Trefferauswertung T-AUSW zugeführt, von dieser ausgewertet und das gewonnene Ergebnis der übergeordneten Steuerung HAS-ST zugeleitet, die davon abhängig die Arbeitsfolge des Hybrid-Assoziativspeichers steuert. Die Trefferauswertung T-AUSW kann dabei entsprechend Fig. 5 der DE-OS 32 16 905 oder in Anlehnung an Fig. 2 der DE-PS 30 09 329 ausgebildet sein.

Die übergeordnete Steuerung HAS-ST, die insbesondere — wie bei der zuvor genannten DE-OS 32 16 905 (Fig. 3) — als Mikroprozessor ausgebildet sein kann, steuert in an sich bekannter Weise den gesamten Arbeitsablauf des Hybrid-Assoziativspeichers anhand der von außen zugeführten Befehle zur Durchführung vorgegebener Aufgaben, die dann vom Hybrid-Assoziativspeicher autonom ausgeführt werden.

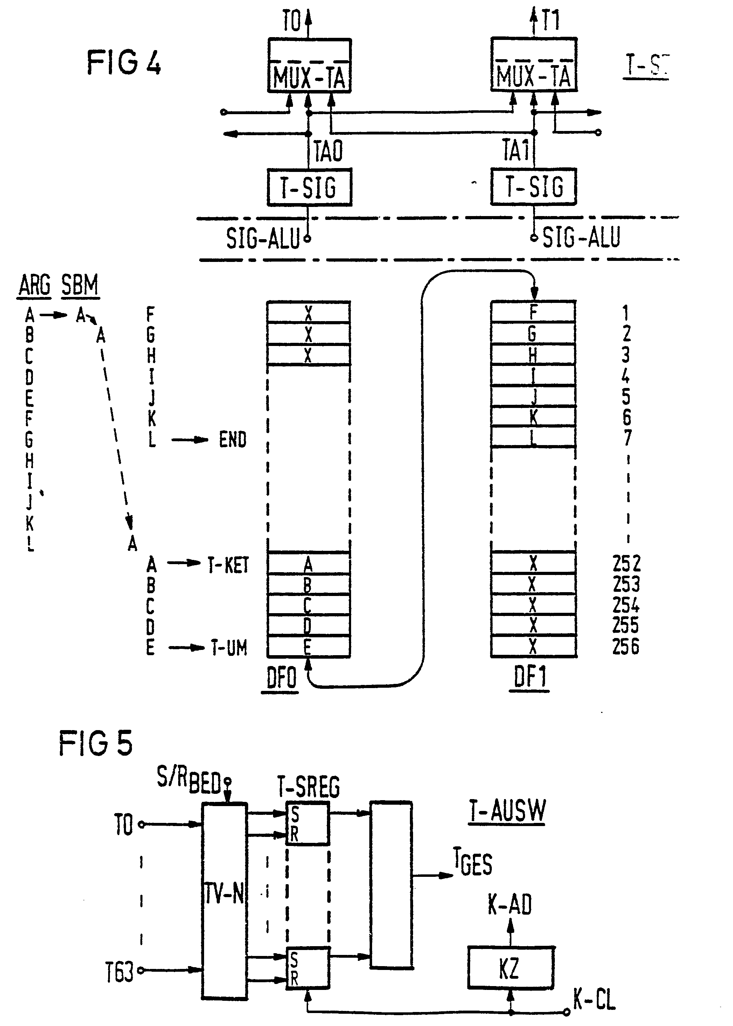

Eine dieser möglichen Aufgaben besteht in einem Aufsuchen von Daten anhand eines vorgegebenen Suchargumentes aus den im Basisspeicher abgespeicherten Datenfolgen, was nachfolgend anhand von Fig. 4 und Fig. 6 näher erläutert werden soll.

Das Suchargument ARG möge — wie Fig. 4 zeigt — aus mehreren Zeichen, z. B. A bis L, zusammengesetzt sein und im Parameterspeicher PAR-SP gespeichert vorliegen. In diesem Falle ist jeweils auf Gleichheit zwischen dem jeweils gültigen Suchargumentzeichen und den aus dem Basisspeicher bereitgestellten Datenzeichen zu prüfen, was durch einen der Funktion « B-A » entsprechenden Steuerbefehl CMD der ALU (Fig. 2) aller Verknüpfungseinheiten ALV0 bis ALV63 der assoziativen Oberfläche ASS-FL (Fig. 1) mitgeteilt wird.

Bevor jedoch der Suchvorgang gestartet werden kann, sind wenigstens die Startadressen für den Basisspeicher B-SP und den Parameterspeicher PAR-SP bereitzustellen. Anhand dieser Startadressen werden die beiden Speicher zu Beginn des Suchvorganges angesteuert und die jeweils ersten Zeichen der Parameter und die der gleichzeitig zu prüfenden Datenfolgen in die Register der einzelnen Verknüpfungseinheiten ALV0 bis ALV63 geladen. Dann wird der bereitgestellte Assoziationsbefehl ausgeführt und von der Trefferauswertung T-AUSW überprüft, ob für eine der Datenfolgen wenigstens ein Treffer T... vorliegt. Ist dies nicht der Fall, dann beginnt der Suchvorgang von neuem, und zwar mit dem jeweils ersten Zeichen der Parameter PAR, aber mit einer um einen Zeichenschritt gegenüber der ursprünglichen Startadresse veränderten Folgestartadresse für den Basisspeicher.

Fig. 4 zeigt eine schematische Darstellung der Zuordnung für beispielsweise aus jeweils 256 Zeichen bestehenden Datenteilfolgen, von denen aber nur zwei, nämlich die Datenteilfolgen DF0 und DF1, dargestellt sind. Das Suchargument ARG besteht aus der Zeichenfolge A bis L, die in der gezeigten Weise auf die beiden Datenfolgen DF0 und DF1 verteilt in der zu überprüfenden Datenmenge enthalten und aufzusuchen ist.

Mit dem Beginn des Suchvorganges wird das erste Zeichen A des Suchargumentes ARG als Suchbitmuster SBM allen Verknüpfungseinheiten der assoziativen Oberfläche zur Verfügung gestellt, und es werden die ersten Zeichen der Datenfolgen gleichzeitig überprüft. Im vorliegend angenommenen Fall ist das Ergebnis negativ, und der Suchvorgang wird erneut gestartet, indem bei unverändertem Suchbitmuster entsprechend dem ersten Zeichen A des Suchargumentes ARG nun die zweiten Zeichen der Datenfolgen überprüft werden usw., bis beim 252. Zeichen der Datenfolgen ein Treffer erzielt wird. Demzufolge wird die Trefferkettung wirksam geschaltet, was mit einem Pfeil T-KET angedeutet ist, und anschließend mit jedem in Folge zu überprüfenden Zeichen der Datenfolgen das Suchbitmuster SBM entsprechend dem vorgegebenen Suchargument ARG in Folge geändert.

Sollte im Rahmen der weiteren Prüfung mal eine Treffermeldung für alle Datenfolgen ausbleiben, dann müßte der Suchvorgang erneut begonnen werden. Im vorliegenden Fall bricht die Trefferkettung jedoch nicht ab. Allerdings wird mit dem letzten Zeichen E der Datenfolge DF0 das Ende der Datenteilfolgen erreicht, was z. B. durch das Erreichen des Speicherendes oder der vorgegebenen Endadresse für den zu überprüfenden Speicherbereich im Basisspeicher B-SP erkannt wird. Damit wird — wie durch den Pfeil T-UM angedeutet ist — die Trefferkettung umgeschaltet und mit der ursprünglichen Startadresse für den Basisspeicher bei fortlaufender Zeichenfolge des Suchargumentes ARG der Suchvorgang fortgesetzt. Die Trefferkettung für die Datenfolge DF0 wird damit entsprechend dem Datenkettungspfeil zwischen dem ersten Zeichen F der Datenfolge DF1 und dem letzten Zeichen E der Datenfolge DF0 auf die erste Datensäule umgeschaltet.

Um letzteres zu verdeutlichen, ist im oberen Teil von Fig. 4 ein Teil der einzelnen Treffersteuerungen T-ST in Anlehnung an Fig. 3 wiedergegeben und die Verknüpfung für die Überleitung der Trefferanzeigen TA auf die Kettungssteuerung der jeweils benachbarten Verknüpfungseinrichtung ALV angedeutet, so daß z. B. nach der Umschaltung die Trefferanzeige TA1 zum Treffersignal T0 führt, als würde die Suche in der ersten Datensäule für die Datenteilfolge DF0 fortgesetzt.

Eine andere Möglichkeit der Trefferkettung bei Erreichen des Endes der zu überprüfenden Datenteilfolgen ist in Fig. 5 dargestellt, wonach die Trefferkettung in die die assoziative Oberfläche ASS-FL überwachende Trefferauswertesteuerung T-AUSW verlagert ist. Jeder Trefferleitung T0 bis T63 der assoziativen Oberfläche ist dazu eine bistabile Kippstufe zugeordnet, die ähnlich den Trefferkippstufen PH-FF in Fig. 3 über ein Verknüpfungsnetzwerk TV-N angesteuert werden und bedingt oder unbedingt abhängig von Signalen $S/R_{BED}$ gesetzt werden können. Diese Kippstufen bilden zusammen ein zyklisches Schieberegister T-SREG, so daß durch Verschieben mit dem Schiebetakt K-CL um jeweils einen Schritt bei Erreichen des Endes der Datenteilfolgen im Rahmen eines Suchvorganges die in einer Kippstufe geketteten Treffer auch mit den nachfolgenden Treffern der zyklisch nachfolgenden Datenteilfolge gekettet werden können, ohne daß eine Umschaltung innerhalb der einzelnen Verknüpfungseinrichtungen ALV mit den entsprechenden Querverbindungen erforderlich ist. Dabei können ohne weiteres mehrere Datenteilfolgen von einem Suchargument erfaßt werden. Um am Ende eines dabei erfolgreich abgeschlossenen Suchvorganges den Speicheranfang für die gefundenen Daten leichter finden zu können, wird die Anzahl der Verschiebungen durch einen Zeiger KZ gezählt und gegebenenfalls in Form einer Adresse K-AD bereitgestellt.

Erreicht die Trefferkettung schließlich das Ende des Suchargumentes ARG, dann bedeutet das den erfolgreichen Abschluß des eingeleiteten Suchvorganges, was durch den Pfeil END angedeutet ist.

Im Flußdiagramm von Fig. 6 wird daher immer die rechte Rücksprungschleife durchlaufen, wenn für keine der überprüften Datenfolgen ein Treffer gemeldet wird, was jeweils zum erneuten Start des Suchvorganges mit Beginn des Suchargumentes ARG bei einem verschobenen neuen Startpunkt für die Datenfolgen führt, als würde das erste Zeichen des Suchargumentes ARG Schritt für Schritt an den Datenfolgen DF... entlang verschoben. Erst wenn aufgrund einer Treffermeldung der Startpunkt fixiert ist, wird das Suchargument Zeichen für Zeichen aufgeweitet, bis die Trefferkettung entweder abbricht, oder aber das Ende des Suchargumentes erreicht wird. Dieses Aufweiten des Suchargumentes wird durch die zweite Rücksprungschleife von links in Fig. 6 sichergestellt. Sollte dabei das Ende der geketteten Datenfolgen erreicht werden, dann tritt stattdessen die erste Rücksprungschleife von links in Funktion.

**Patentansprüche**

1. Verfahren zum Aufsuchen von einem vorgegebenen Suchargument entsprechenden Daten aus einer aus gleich großen kleinsten Einheiten als Prüfeinheiten, z. B. Zeichen, in beliebiger Kombination zusammengesetzten Datenfolge in einem Hybrid-Assoziativspeicher, bei dem Einheiten der Datenfolge einer assoziativen Verknüpfungseinheit zusammen mit den für die Prüfung jeweils benötigten Parametern, z. B. Suchargument, Masken, Steueroperand, zugeführt werden, dadurch gekennzeichnet, daß folgende Schritte vorgesehen sind :

a) zu Beginn eines Suchvorganges werden vom vorgegebenen Startschritt der Datenfolge ausgehend die einzelnen Zeichen der Datenfolge zunächst nacheinander mit dem ersten Zeichen des Suchargumentes überprüft, bis ein Treffer erkannt wird und dann ein Treffersignal erzeugt,

b) bei Auftreten eines Treffersignals wird durch eine Anordnung zur Trefferkettung die Trefferkettung eingeschaltet,

c) solange die Trefferkettung besteht werden alle nachfolgenden Zeichen der Datenfolge mit den jeweils zugeordneten fortlaufenden Zeichen des Suchargumentes überprüft,

d) wird bei bestehender Trefferkettung das Ende der Datenfolge erreicht, dann wird unter Aufrechterhaltung der Trefferkettung mit dem ersten Zeichen der nächsten Datenfolge die Suche fortgesetzt,

e) bei Ausbleiben eines Treffersignals wird die Trefferkettung abgebrochen und ein neuer Suchvorgang mit um ein Zeichen gegenüber dem bisherigen Startschritt verschobenen Startschritt eingeleitet und entsprechend Schritt f) fortgefahren,

f) der Suchvorgang wird beendet, wenn alle Zeichen des Suchargumentes abgearbeitet worden sind oder wenn alle Datenfolgen überprüft worden sind, sonst wird mit dem Schritt a) fortgefahren.

2. Verfahren nach Anspruch 1, dadurch gekennzeichnet, daß in einem Basisspeicher die Datenfolgen in benachbart liegenden Feldern eingespeichert werden und der Suchvorgang bei bestehender Trefferkettung bei Erreichen des Endes der letzten Datenfolge in einem Feld mit der ersten Datenfolge eines anderen Feldes fortgesetzt wird.

3. Verfahren nach Anspruch 1 oder 2, dadurch gekennzeichnet, daß bei jeweils gleichzeitiger Überprüfung von getrennten Datenfolgen anhand jeweils derselben Parameter der jeweils eingeleitete Suchvorgang erst dann abgebrochen wird, wenn nach der Wirksamschaltung der Trefferkettung für keine der gleichzeitig überprüften Datenfolgen ein Treffer angezeigt wird.

4. Anordnung zur Durchführung des Verfahrens nach einem der Ansprüche 1 bis 3, bei der ein Hybrid-Assoziativspeicher vorgesehen ist, der aus wenigstens einer Verknüpfungseinheit (ALV) als assoziative Oberfläche (ASS-FL), einem normalen Zugriffsspeicher als Basisspeicher (B-SP) und einer Ablaufsteuerung (HAS-ST) zur Durchführung der Suchprozedur und zur Bereitstellung der jeweils benötigten Parameter (PAR) und Steuersignale (CMD) einheitlich für alle Verknüpfungseinheiten (ALV) besteht, dadurch gekennzeichnet, daß innerhalb jeder Verknüpfungseinheit (ALV) eine Anordnung (T-ST) zur Trefferkettung vorgesehen ist, die durch die Ablaufsteuerung (HAS-ST) laufend überwacht und durch diese abhängig vom jeweiligen Ergebnis des laufenden Suchvorganges beeinflußt wird, und daß eine mit den Verknüpfungseinheiten (ALV) der assoziativen Oberfläche (ASS-FL) gekoppelte gemeinsame Trefferauswertesteuerung (T-AUSW) zur Überwachung der von den individuellen Anordnungen (T-ST) zur Trefferkettung gelieferten Treffersignale (T) und zur Beeinflussung der Ablaufsteuerung (HAS-ST) abhängig von diesen Treffersignalen vorgesehen ist.

5. Anordnung nach Anspruch 4 gekennzeichnet durch eine Umschalteeinrichtung (MUX-TA) für die Anordnung (T-ST) zur Trefferkettung innerhalb der einzelnen Verknüpfungseinrichtungen (ALV) der assoziativen Oberfläche (ASS-FL) zur Übernahme von Treffersignalen ($T\text{-}ALV_{(n\,\pm\,1)}$) der Anordnung (T-ST) zur Trefferkettung benachbarter Verknüpfungseinrichtungen ($ALV_{(n-1)}$) bzw. ($ALV_{(n+1)}$) abhängig von einem gemeinsamen Steuersignal (CMD) der Ablaufsteuerung (HAS-ST) zwecks Kettung der Prüfergebnisse von geketteten Datenteilfolgen am Ende der Datenteilfolgen.

6. Anordnung nach einem der Ansprüche 4 bis 5, dadurch gekennzeichnet, daß die Anordnung (T-ST) zur Trefferkettung innerhalb jeder Verknüpfungseinheit (ALV) jeweils wenigstens eine bistabile Kippstufe (z. B. PH-FF0) aufweist, die durch ein erstes Steuersignal (S) der Ablaufsteuerung (HAS-ST) zu Beginn eines Suchvorganges unbedingt oder in Verbindung mit einem Treffer bedingt gesetzt und anschließend die Trefferkettung wirksam geschaltet wird, indem durch ein nachfolgendes zweites Steuersignal ($R_b$) der Ablaufsteuerung zusammen mit dem Ausbleiben einer Trefferanzeige (TA) die Kippstufe (z. B. PH-FF0) bedingt zurückgesetzt wird und in diesem Zustand bis zur Beendigung eines laufenden Suchvorganges verbleibt.

7. Anordnung nach einem der Ansprüche 4 bis 6, dadurch gekennzeichnet, daß in der Trefferauswertesteuerung (T-AUSW) je Verknüpfungseinheit (ALV) wenigstens eine Kippstufe zur Trefferkettung vorgesehen ist und daß diese Kippstufen ein Schieberegister (T-SREG) bilden, dessen Inhalt bei Übergang von einer geketteten Datenteilfolge auf die nachfolgende zur Aufrechterhaltung der Trefferkettung zyklisch um einen Schritt in der entsprechenden Richtung verschoben wird, und daß eine Speichereinrichtung zum Festhalten der Anzahl der insgesamt vorgenommenen Verschiebeschritte für die Ermittlung des Speicheranfangs für die am Schluß eines Suchvorganges aufgefundenen Daten vorgesehen ist.

8. Anordnung nach einem der Ansprüche 4 bis 7, gekennzeichnet durch einen Hybrid-Assoziativspeicher, dessen Basisspeicher (B-SP) in einer oder mehreren Speichergruppen (z. B. MD0) zeilenweise einzeln adressierbare Dateneinheiten jeweils vertikal aufeinanderfolgend gespeichert enthält, wobei die Dateneinheiten jeweils in Zeichen entsprechende Subeinheiten unterteilt sind und jeder Subeinheitspalte eine Verknüpfungseinheit (ALV) der assoziativen Oberfläche (ASS-FL) zugeordnet ist und wobei jeweils innerhalb einer Speichergruppe (z. B. MD0) durch jeweils

versetzte Einordnung der Subeinheiten mehrerer Dateneinheiten gemäß einem vorgegebenen Einordnungsschema in Verbindung mit intern gesteuerten Adressenumordnern für die Zeilenadressen und Datenumordnern für die Subeinheiten der betroffenen Dateneinheiten entweder alle Subeinheiten je einer Dateneinheit aus jeder Speichergruppe (z. B. MD0) oder aber die einander korrespondierenden Subeinheiten einer entsprechenden Anzahl von Dateneinheiten als jeweils eine Dateneinheit aus jeder Speichergruppe zur assoziativen Oberfläche (ASS-FL) durchschaltbar sind.

9. Anordnung nach Anspruch 8, dadurch gekennzeichnet, daß die Parameter jeweils derselben Art als Subeinheiten in Parameter-Dateneinheiten zusammengefaßt extern bereitgestellt werden, daß die Speicher für die Parameter als einheitlicher Speicher (PAR-SP) in gleicher Weise wie der Basisspeicher (B-SP) organisiert sind und entsprechende Adressenumordner und Datenumordner die richtige Zuordnung der jeweils benötigten unterschiedlichen Parametersubeinheiten zu den aus dem Basisspeicher (B-SP) zur Verfügung gestellten Datensubeinheiten sicherstellen, wobei die jeweils bereitgestellten Parametersubeinheiten einheitlich auf alle Verknüpfungseinheiten (ALV...) der assoziativen Oberfläche (ASS-FL) einwirken.

## Claims

1. A method of searching for data, in accordance with a predetermined search argument, in a data sequence which is composed of equal sized, smallest units as checking units, e. g. characters, in an arbitrary combination, in a hybrid associative store, wherein units of the data sequence are supplied to an associative logic-linking unit together with parameters required for the checking procedure, e. g. search argument, masks, control operand, characterised in that the following steps are provided :

a) at the beginning of a search procedure, commencing from the predetermined start element of the data sequence, the individual characters of the data sequence are firstly consecutively checked with the first character of the search argument until a hit is recognised whereupon a hit signal is generated,

b) on the occurrence of a hit signal a hit chaining arrangement activates the hit chain,

c) for such time as the hit chain exists, all the following characters of the data sequence are checked with the respective, assigned, consecutive characters of the search argument,

d) if the end of the data sequence is reached when the hit chain is in existence, the search is continued with the first character of the next data sequence, maintaining the hit chain,

e) when a hit signal fails to occur, the hit chain is broken and a new search procedure is initiated with a start element displaced by one character in relation to the previous start element, and is continued in accordance with step f),

f) the search procedure is terminated when all the characters of the search argument have been processed or when all the data sequences have been checked, otherwise it is continued in accordance with step a).

2. A method as claimed in claim 1, characterised in that in a base store the data sequences are stored in adjacent arrays and if a hit chain is in existence when the end of the last data sequence in an array is reached, the search procedure is continued with the first data sequence of another array.

3. A method as claimed in claim 1 or claim 2, characterised in that when separate data sequences are simultaneously checked on the basis of the same parameters, the respective initiated search procedure is not interrupted until, following the actuation of the hit chain, no hit is indicated for any of the simultaneously checked data sequences.

4. An arrangement for carrying out the method claimed in one of the claims 1 to 3, wherein a hybrid associative store is provided which comprises at least one logic-linking unit (ALV) as associative area (ASS-FL), a normal access store as base store (B-SP), and flow control unit (HAS-ST) for carrying out the search procedure and for making available the respective required parameters (PAR) and control signals (CMD) commonly for all the logic-linking units (ALV), characterised in that within each logic-linking unit (ALV) a hit chaining arrangement (T-ST) is provided which is continuously monitored by the flow control unit (HAS-ST) and is influenced by the latter in dependence upon the respective result of the search procedure in progress, and that a common hit analysis control unit (T-AUSW) is provided which is coupled to the logic-linking units (ALV) of the associative area (ASS-FL) and which serves to monitor the hit signals (T) supplied by the individual hit chaining arrangements (T-ST) and to control the flow control unit (HAS-ST) in dependence upon these hit signals.

5. An arrangement as claimed in claim 4, characterised by a switch-over device (MUX-TA) for the hit chaining arrangement (T-ST) within the individual logic-linking units (ALV) of the associative area (ASS-FL) for the transfer of hit signals (T-$ALV_{(n\pm1)}$) of the hit chaining arrangement (T-ST) of adjacent logic-linking devices ($ALV_{(n-1)}$) and ($ALV_{(n+1)}$) in dependence upon a common control signal (CMD) of the flow control unit (HAS-ST) for the chaining of the checking results of chained data sub-sequences at the end of the data sub-sequences.

6. An arrangement as claimed in one of the claims 4 to 5, characterised in that within each logic-linking unit (ALV) the hit chaining arrangement (T-ST) comprises at least one bistable flip-flop (e. g. PH-FF0) which is unconditionally set by a first control signal (S) of the flow control unit (HAS-ST) at the beginning of a search procedure or is conditionally set in association with a hit, whereupon the hit chain is actuated, in that the flip-flop (e. g. PH-FF0) is conditionally reset by a following second control signal ($R_b$) of the flow control unit in conjunction with the absence of a hit indication (TA), and remains in this state until the end of a search procedure which is in progress.

7. An arrangement as claimed in one of the claims 4 to 6, characterised in that at least one hit chaining flip-flop is provided in the hit analysis control unit (T-AUSW) in respect of each logic-linking unit (ALV) and that these flip-flops form a shift register (T-SREG) whose content is cyclically displaced by one element in the appropriate direction in the event of a transition from one chained data sub-sequence to the next in order to maintain the hit chain, and that a storage device serves to store the total number of shift steps carried out in order to determine the start of the store for the data found at the end of a search procedure.

8. An arrangement as claimed in one of the claims 4 to 7, characterised by a hybrid associative store, the base store (B-SP) of which includes data units which can be individually addressed line by line in one or more than one storage group (e. g. MD0) and which are stored in a vertical series, where the data units are each divided into sub-units corresponding to characters and each sub-unit column is assigned one logic-linking unit (ALV) of the associative area (ASS-FL) and where within a storage group (e. g. MD0) by offset classification of the sub-units of a plurality of data units in accordance with a predetermined classification plan in combination with internally controlled address reclassifiers for the row addresses and data reclassifiers for the sub-units of the respective data units, either all the sub-units of a data unit of each storage group (e. g. MD0) or the mutually corresponding sub-units of a corresponding number of data units can be switched through, in each case as a data unit, from each storage group to the associative area (ASS-FL).

9. An arrangement as claimed in claim 8, characterised in that parameters in each case of the same type are made available externally as sub-units, combined in parameter data units, that the stores for the parameters are organised as unitary stores (PAR-SP) in the same way as the base store (B-SP), and corresponding address reclassifiers and data reclassifiers ensure the correct assignmemt of the respective required, different parameter sub-units from the data sub-units made available from the base store (B-SP), where the parameter sub-units which are in each case made available, uniformly control all the logic-linking units (ALV...) of the associative area (ASS-FL).

## Revendications

1. Procédé pour rechercher des données correspondant à un argument de recherche prédéterminé, à partir d'une suite de données constituée par la réunion d'unités extrêmement petites de même taille constituant des unités de contrôle, par exemple des signes, selon une combinaison quelconque, dans une mémoire associative hybride, et selon lequel des unités de la suite de données sont envoyées en même temps que les paramètres respectivement nécessaires pour le contrôle, par exemple un argument de recherche, des masques, un opérande de commande, à une unité combinatoire associative, caractérisé par le fait que les étapes opératoires suivantes sont prévues :

a) au début d'une opération de recherche, les différents signes de la suite de données sont contrôlés tout d'abord successivement avec le premier signe de l'argument de recherche, à partir du pas prédéterminé de démarrage de la suite de données, jusqu'à ce qu'un coup au but soit identifié et alors un signal de coup au but est produit,

b) lors de l'apparition d'un signal de coup au but, le chaînage des coups au but est déclenché par un dispositif utilisé pour le chaînage des coups au but,

c) tant que le chaînage des coups au but est présent, tous les signes suivants de la suite de données sont contrôlés au moyen des signes successifs respectivement associés de l'argument de recherche,

d) si la fin de la suite de données est atteinte alors que le chaînage des coups au but est présent, la recherche se poursuit avec le premier signe de la suite de données immédiatement suivante, moyennant le maintien du chaînage des coups au but,

e) lors de l'absence d'un signal de coup au but, le chaînage des coups au but est interrompu et une nouvelle opération de recherche est déclenchée avec un pas de démarrage décalé d'un signe par rapport au pas de démarrage existant jusqu'alors, et est poursuivie conformément au pas f), et

f) l'opération de recherche est terminée lorsque tous les signes de l'argument de recherche ont été traités ou bien lorsque les suites de données ont été contrôlées, sinon l'opération de recherche se poursuit avec le pas a).

2. Procédé suivant la revendication 1, caractérisé par le fait que les suites de données sont mémorisées dans des zones voisines dans une mémoire de base et que, dans le cas de la présence du chaînage des coups au but, lorsque la fin de la dernière suite de données d'une zone est atteinte, l'opération de recherche se poursuit avec la première suite de données d'une autre zone.

3. Procédé suivant la revendication 1 ou 2, caractérisé par le fait que dans le cas du contrôle simultané de suites séparées de données l'opération de recherche respectivement déclenchée est interrompue uniquement sur la base des mêmes paramètres lorsqu'après le rétablissement du chaînage des coups au but, aucun coup au but n'est affiché pour aucune des suites de données contrôlées simultanément.

4. Dispositif pour la mise en œuvre du procédé

suivant l'une des revendications 1 à 3, dans lequel il est prévu une mémoire associative hybride qui est constituée par au moins une unité combinatoire (ALV) utilisée en tant que surface associative (ASS-FL), une mémoire à accès normal utilisée en tant que mémoire de base (B-SP) et un dispositif de commande d'exécution (HAS-ST) pour l'exécution de la procédure de recherche et pour la préparation des paramètres (PAR) et des signaux de commande (CMD), respectivement nécessaires, d'une manière uniforme pour toutes les unités combinatoires (ALV), caractérisé par le fait qu'à l'intérieur de chaque unité combinatoire (ALV) il est prévu un dispositif (T-ST) servant à réaliser le chaînage des coups au but qui est contrôlé en permanence par le dispositif de commande d'exécution (HAS-ST) et est influencé par ce dernier en fonction du résultat respectif de l'opération de recherche en cours, et qu'il est prévu un dispositif commun (T-AUSW) d'évaluation des coups au but, qui est accouplé aux unités combinatoires (ALV) de la surface associative (ASS-FL), pour réaliser le contrôle des signaux de coups au but (T) délivrés par les dispositifs individuels (T-ST) qui sont utilisés pour le chaînage des coups au but, et pour agir sur le dispositif de commande d'exécution (HAS-ST) en fonction de ces signaux de coups au but.

5. Dispositif suivant la revendication 4, caractérisé par un dispositif de commutation (MUX-TA) prévu pour le dispositif (T-ST) réalisant le chaînage des coups au but, à l'intérieur des différents dispositifs combinatoires (ALV) de la surface associative (ASS-FL) pour le transfert de signaux de coups au but (T-ALV$_{(n\pm1)}$) du dispositif (T-ST) utilisé pour le chaînage des coups au but de dispositifs combinatoires voisins (ALV$_{(n-1)}$ ou ALV$_{(n+1)}$) en fonction d'un signal de commande commun (CMD) du dispositif de commande d'exécution (HAS-ST) en vue de réaliser le chaînage des résultats du contrôle de suites partielles enchaînées de données à la fin des suites partielles de données.

6. Dispositif suivant l'une des revendications 4 à 5, caractérisé par le fait que le dispositif (T-ST) qui est prévu pour le chaînage des coups au but comporte, à l'intérieur de chaque unité combinatoire (ALV), respectivement au moins un étage à bascule bistable (par exemple PH-FF0), qui est positionné par un premier signal de commande (S) délivré par le dispositif de commande d'exécution (HAS-ST) de façon inconditionnelle au début d'une opération de recherche ou bien de façon conditionnelle en fonction d'un coup au but et qu'ensuite le chaînage des coups au but est déclenché par le fait que grâce à un second signal ultérieur de commande (R$_b$) délivré par le dispositif de commande d'exécution et en association avec l'absence d'un affichage de coup au but (TA), l'étage à bascule (par exemple (PH-FF0) est ramené à l'état initial de façon conditionnelle et reste dans cet état jusqu'à la fin d'une opération de recherche en cours.

7. Dispositif suivant l'une des revendications 4 à 6, caractérisé par le fait qu'au moins un étage à bascule servant à réaliser le chaînage des coups au but est prévu dans le dispositif (T-AUSW) d'évaluation des coups au but pour chaque unité combinatoire (ALV) et que ces étages à bascule forment un registre à décalage (T-SREG), dont le contenu est décalé cycliquement d'un pas dans la direction correspondante lors du transfert d'une suite partielle enchaînée à la suite partielle suivante pour le maintien du chaînage des coups au but, et qu'il est prévu un dispositif de mémoire servant à conserver le nombre des pas de décalage exécutés au total pour la détermination du début de la mémoire pour les données détectées à la fin d'une opération de recherche.

8. Dispositif suivant l'une des revendications 4 à 7, caractérisé par une mémoire associative hybride, dont la mémoire de base (B-SP) contient, dans un ou plusieurs groupes de mémoire (par exemple MD0), des unités de données pouvant être adressées individuellement ligne par ligne et qui sont mémorisées successivement verticalement, et dans lequel les unités de données sont subdivisées respectivement en unités secondaires correspondant à des signes et l'unité combinatoire (ALV) de la surface associative (ASS-FL) est associée à chaque colonne d'unités secondaires et dans lequel respectivement à l'intérieur d'un groupe de mémoire (par exemple MD0), grâce à un rangement respectivement décalé des unités secondaires faisant partie de plusieurs unités de données conformément à un schéma prédéterminé du rangement en liaison avec des dispositifs, commandés de façon interne, de réarrangement d'adresses pour les adresses de lignes et avec des dispositifs de réarrangement de données pour les unités secondaires des unités de données considérées, soit toutes les unités secondaires de chaque unité de données peuvent être transmises directement à partir de chaque groupe de mémoire (par exemple MD0) ou bien les unités secondaires, qui se correspondent respectivement, d'un nombre donné d'unités de données peuvent être transmises directement respectivement sous la forme d'une unité de données à partir de chaque groupe de mémoire en direction de la surface associative (ASS-FL).

9. Dispositif suivant la revendication 8, caractérisé par le fait que les paramètres du même type sont préparés ultérieurement en étant réunis sous la forme d'unités secondaires dans des unités de données de paramètres, que les mémoires pour les paramètres sont organisées sous la forme d'une mémoire unitaire (PAR-SP) de la même manière que la mémoire de base (B-SP) et que des dispositifs correspondants de réarrangement d'adresses et des dispositifs correspondants de réarrangement de données garantissent l'association correcte des unités secondaires de paramètres, différentes et respectivement nécessaires, aux unités secondaires de données disponibles à partir de la mémoire de base (B-SP), auquel cas les unités secondaires de paramètres, respectivement préparées, agissent d'une manière uniforme sur toutes les unités combinatoires (ALV...) de la surface associative (ASS-FL).

# FIG 1

# FIG 2

FIG 3

0 139 817

**0 139 817**

**FIG 4**

**FIG 5**

4

**0 139 817**

FIG 6